# EUROPEAN PATENT APPLICATION

(11) **EP 4 757 172 A1**
(43) Date of publication of application: **10.06.2026**
(21) Application number: 24848031.1
(22) Date of filing: 17.07.2024
(51) Int. Cl.: H02S 20/30, H02S 30/20, B60L 8/00, F24S 30/20

(54) **SOLAR POWER GENERATION APPARATUS AND VEHICLE**

(30) Priority: 31.07.2023 CN 202322053662 U
(71) Applicant: BYD Company Limited, Shenzhen, Guangdong 518118 (CN)
(72) Inventor: LING, Heping, Shenzhen, Guangdong 518118 (CN); LIU, Junhua, Shenzhen, Guangdong 518118 (CN); LAI, Jinfu, Shenzhen, Guangdong 518118 (CN); WANG, Yue, Shenzhen, Guangdong 518118 (CN); CHEN, Yijian, Shenzhen, Guangdong 518118 (CN)
(74) Representative: Taor, Simon Edward William
(86) International application number: PCT/CN2024/106016
(87) International publication number: WO 2025/026072

(57) **Abstract**

A vehicle has a solar power generation apparatus. The solar power generation apparatus includes a first photovoltaic panel, a second photovoltaic panel, a slide rod, and a connecting rod. The first photovoltaic panel has a slide rail extending in a first direction. The slide rod is slidably connected to a slide rail in the first direction. The second photovoltaic panel is connected to the slide rod, and is movable relative to the first photovoltaic panel in the first direction as the slide rod slides. One end of the connecting rod is rotatably connected to the slide rod, and the other end is rotatably connected to the second photovoltaic panel.

## Description

This application claims priority to Chinese Patent Application No. CN202322053662.2, filed with the China National Intellectual Property Administration on July 31, 2023 and entitled "SOLAR POWER GENERATION APPARATUS AND VEHICLE", which is incorporated herein by reference in its entirety.

### TECHNICAL FIELD

This application relates to the field of solar power generation technologies, and more specifically, to a solar power generation apparatus and a vehicle.

### BACKGROUND

A photovoltaic panel is a device that converts solar energy into electric energy, allowing direct conversion of light energy into electric energy for power supply. When used in an electric vehicle, the photovoltaic panel can collect solar energy during driving, convert the solar energy into electric energy, and store the electric energy in a battery, thereby implementing battery endurance of the electric vehicle. Currently, many solar-powered automobiles are equipped with solar panels or solar photovoltaic panels on roofs. However, due to limited roof space, an area of the solar photovoltaic panel is limited, resulting in a significantly insufficient power generation output.

Therefore, there is a need to provide a solar power generation apparatus and a vehicle to at least partially resolve the foregoing problem.

### SUMMARY

A series of concepts in a simplified form are introduced to the SUMMARY, which are further described in detail in the description of embodiments below. The SUMMARY of this application neither means an attempt to define a key feature and a necessary technical feature of the technical solutions claimed for protection, nor means an attempt to determine the protection scope of the technical solutions claimed for protection.

To at least partially resolve the foregoing problem, a first aspect of this application provides a solar power generation apparatus. The apparatus includes:
a first photovoltaic panel, where the first photovoltaic panel has at least one slide rail extending in a first direction;
a slide rod, where the slide rod is disposed corresponding to a slide rail, and is slidably connected to the corresponding slide rail in the first direction;
a second photovoltaic panel, where the second photovoltaic panel is connected to the slide rod, and is movable relative to the first photovoltaic panel in the first direction as the slide rod slides; and
at least one connecting rod, where one end of the connecting rod is pivotally connected to the slide rod, and the other end is pivotally connected to the second photovoltaic panel.

Optionally, the connecting rod is a telescopic rod.

Optionally, the first photovoltaic panel has two slide rails respectively disposed on two sides of the first photovoltaic panel in a second direction, and the second direction is different from the first direction.

Optionally, connecting rods are divided into two groups, each of the two groups has one or a plurality of connecting rods, and the two groups of connecting rods are respectively connected to two slide rods.

Optionally, each of the two groups has a plurality of connecting rods, and lengths of the connecting rods in the same group are different, so that the second photovoltaic panel is inclined to the first photovoltaic panel.

Optionally, lengths of the two groups of connecting rods are different, so that the second photovoltaic panel is inclined to the first photovoltaic panel.

Optionally, the first direction is perpendicular to the second direction.

Optionally, a support rod is further disposed in the solar power generation apparatus; the support rod is connected to the second photovoltaic panel; and the support rod is configured to support the second photovoltaic panel when the second photovoltaic panel is moved in the first direction to a position deviating from the first photovoltaic panel.

Optionally, the support rod is rotatably connected to the second photovoltaic panel.

Optionally, the support rod is a telescopic rod.

Optionally, shapes of the first photovoltaic panel and the second photovoltaic panel are similar or congruent.

Optionally, a surface of the first photovoltaic panel facing the second photovoltaic panel is arranged with a buffer ring, and/or
a surface of the second photovoltaic panel facing the first photovoltaic panel is arranged with a buffer ring.

Optionally, each or either of the first photovoltaic panel and the second photovoltaic panel is a transparent photovoltaic panel.

Optionally, when the second photovoltaic panel is moved in the first direction to a limit position deviating from the first photovoltaic panel, the first photovoltaic panel and the second photovoltaic panel do not overlap in a projection of the solar power generation apparatus in a direction perpendicular to the first photovoltaic panel.

A second aspect of this application provides a vehicle, including the foregoing solar power generation apparatus.

### BRIEF DESCRIPTION OF DRAWINGS

The following accompanying drawings of implementations of this application are included herein as a part of this application for understanding this application. Implementations of this application and descriptions thereof are shown in the accompanying drawings, and are used to explain the principles of this application. In the accompanying drawings,
FIG. 1 is a three-dimensional diagram of a solar power generation apparatus according to a preferred implementation of this application, where a second photovoltaic panel is located in a third position and a connecting rod is not upright;
FIG. 2 is a three-dimensional diagram of a solar power generation apparatus according to a preferred implementation of this application, where a second photovoltaic panel is located in a second position and a connecting rod is upright but not extended;
FIG. 3 is a three-dimensional diagram of a solar power generation apparatus according to a preferred implementation of this application, where a second photovoltaic panel is located in a second position and a connecting rod is upright and extended;
FIG. 4 is a three-dimensional diagram of a solar power generation apparatus according to a preferred implementation of this application, where a second photovoltaic panel is located in a second position and is inclined;
FIG. 5 is a three-dimensional diagram of a solar power generation apparatus according to a preferred implementation of this application, where a second photovoltaic panel is located between a first position and a second position;
FIG. 6 is a three-dimensional diagram of a solar power generation apparatus according to a preferred implementation of this application, where a second photovoltaic panel is located in a first position and a support rod is upright and extended to a first length;
FIG. 7 is a three-dimensional diagram of a solar power generation apparatus according to a preferred implementation of this application, where a second photovoltaic panel is located in a first position and a support rod is upright and extended to a second length;
FIG. 8 is a three-dimensional diagram of a vehicle according to a preferred implementation of this application, where a second photovoltaic panel is located in a third position and a connecting rod is not upright; and
FIG. 9 is a three-dimensional diagram of a vehicle according to a preferred implementation of this application, where a second photovoltaic panel is located in a first position and a support rod is upright and extended to a second length.

### Reference numerals:

1: solar power generation apparatus;
2: vehicle;
10: first photovoltaic panel;
11: slide rail;
20: second photovoltaic panel;
21: slide rod;
22: connecting rod;
23: support rod;
30: buffer ring;
D1: first direction;
D2: second direction;
DH: vertical direction.

### DESCRIPTION OF EMBODIMENTS

In the following descriptions, a lot of specific details are given to provide a more thorough understanding of this application. However, it will be apparent to a person skilled in the art that implementations of this application may be implemented without one or more of these details. In other examples, to avoid confusion with implementations of this application, some technical features known in the art are not described.

In this specifications, ordinal numbers such as "first" and "second" referenced in this application are merely identifiers and do not have any other meaning, such as a specific order. In addition, for example, the term "first member" does not imply presence of a "second member", and the term "second member" does not imply presence of a "first member".

In this specifications, "up", "down", "front", "rear", "left", "right" and the like are merely used to indicate a relative position relationship between related parts, rather than to limit absolute positions of these related parts.

In this specifications, "equal," "same," and the like do not strictly limit the meaning to mathematical and/or geometric definitions, but also include an error that can be understood by a person skilled in the art, allowing for manufacturing or usage variations.

Unless otherwise stated, a value range in this specifications includes an entire range within two endpoints, and subranges contained therein.

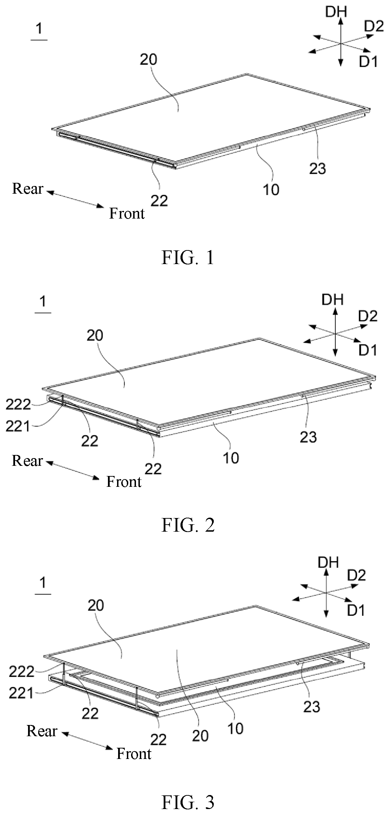

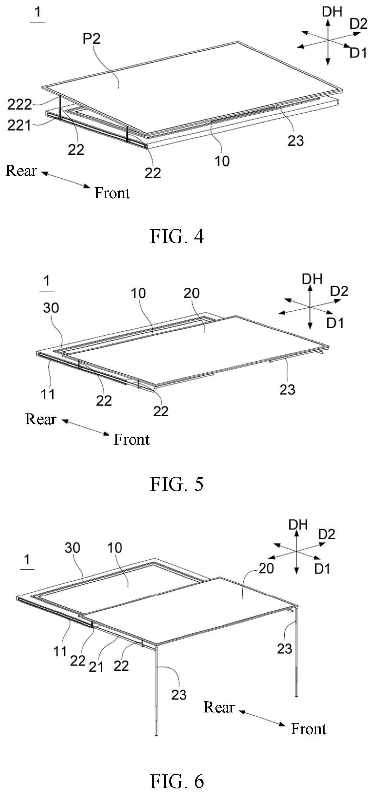

As shown in FIG. 1 to FIG. 7, embodiments of this application provide a solar power generation apparatus 1, which includes a first photovoltaic panel 10 and a second photovoltaic panel 20. The second photovoltaic panel 20 is arranged above the first photovoltaic panel 10. The second photovoltaic panel 20 is movable relative to the first photovoltaic panel 10. For example, the second photovoltaic panel 20 has a first position, a second position, and a third position relative to the first photovoltaic panel 10. When the second photovoltaic panel 20 is located in the first position (as shown in FIG. 6), the second photovoltaic panel 20 is staggered from the first photovoltaic panel 10, to maximize exposure of the first photovoltaic panel 10. When the second photovoltaic panel 20 is located in the second position (as shown in FIG. 2), the second photovoltaic panel 20 is approximately located directly above the first photovoltaic panel 10 and is spaced apart from the first photovoltaic panel 10. When the second photovoltaic panel 20 is located in the third position (as shown in FIG. 1), the second photovoltaic panel 20 is approximately located directly above the first photovoltaic panel 10 and is attached to the first photovoltaic panel 10.

The solar power generation apparatus 1 specifically drives the second photovoltaic panel 20 through the following structure.

The solar power generation apparatus 1 includes a slide rail 11, a slide rod 21, and a connecting rod 22.

The slide rail 11 is disposed on the first photovoltaic panel 10, and is parallel to the first photovoltaic panel 10. The first photovoltaic panel 10 has at least one slide rail 11. The slide rail 11 extends in a first direction D1. The first direction D1 corresponds, for example, to a horizontal direction. The first direction D1 corresponds, for example, to a front-rear direction of the vehicle. Optionally, the slide rail 11 is fastened to a side (a left side and/or a right side) of the first photovoltaic panel 10 and is parallel to a movement direction of the second photovoltaic panel 20. It may be understood that there may be two slide rails 11, and the two slide rails 11 are disposed on two sides of the first photovoltaic panel 10 in the second direction D2. The slide rail 11 is used to provide a parallel track for stable operation. The second direction D2 is different from the first direction D1. For example, the second direction D2 is perpendicular to the first direction D1. The second direction corresponds, for example, to a horizontal direction. The second direction D2 corresponds, for example, to a left-right direction of the vehicle.

In this application, the front-rear direction means a front-rear direction of a vehicle when fully assembled, with a front side of the vehicle being a front side and a rear side of the vehicle being a rear side. The left-right direction is a width direction of the vehicle. When a user faces the front side of the vehicle, a side corresponding to the left of the user is a left side, and a side corresponding to the right of the user is a right side.

The slide rod 21 is disposed corresponding to the slide rail 11. The slide rod 21 is disposed below the second photovoltaic panel 20, and the slide rod 21 is slidably connected to the corresponding slide rail 11. The slide rod 21 is slidably connected to the corresponding slide rail 11 in the first direction D1. It may be understood that when the slide rod 21 is moved in a direction away from the first photovoltaic panel 10, the slide rod 21 gradually extends out of the slide rail 11. When the slide rod 21 is moved in a direction close to the first photovoltaic panel 10, the slide rod 21 gradually retracts back into the slide rail 11.

The second photovoltaic panel 20 is connected to the slide rod 21, and is movable relative to the first photovoltaic panel 10 in the first direction along with the sliding of the slide rod (21), to block or expose the first photovoltaic panel 10. When the slide rod 21 is moved in the direction away from the first photovoltaic panel 10, the second photovoltaic panel 20 is moved to a side of the first photovoltaic panel 10 along with the sliding of the slide rod 21, so that the first photovoltaic panel 10 can be exposed to different degrees. As shown in FIG. 6, when the slide rod 21 extends to a limit position, the second photovoltaic panel 20 is located in the first position, which is also a limit position of the second photovoltaic panel 20 deviating from the first photovoltaic panel 10 in the first direction D1. In this case, an entire area of the second photovoltaic panel 20 is under solar irradiation and the entire area of the second photovoltaic panel 20 can generate power; an entire area of the first photovoltaic panel 10 is under solar irradiation and the entire area of the first photovoltaic panel 10 can generate power. That the entire area of the first photovoltaic panel 10 can generate power means that a solar cell of the first photovoltaic panel 10 can be completely irradiated by sunlight without being blocked by another structure, and the solar cell converts light energy into electric energy. That the entire area of the second photovoltaic panel 20 can generate power means that a solar cell of the second photovoltaic panel 20 can be completely irradiated by sunlight without being blocked by another structure, and the solar cell converts light energy into electric energy.

When the second photovoltaic panel 20 is located in the first position, the second photovoltaic panel 20 does not block the first photovoltaic panel 10. That is, when the second photovoltaic panel 20 is moved in the first direction D1 to the limit position deviating from the first photovoltaic panel 10, the first photovoltaic panel 10 and the second photovoltaic panel 20 do not overlap in a projection of the solar power generation apparatus 1 in a direction perpendicular to the first photovoltaic panel 10.

It may be understood that there are two slide rods 21, and the two slide rods 21 fit in the two slide rails 11.

The connecting rod 22 connects the second photovoltaic panel 20 and the slide rod 21 below the second photovoltaic panel 20, so that the second photovoltaic panel 20 and the slide rod 21 have a specific spacing, thereby allowing the second photovoltaic panel 20 and the first photovoltaic panel 10 to have a specific spacing. One end 221 of the connecting rod 22 is rotatably connected to the slide rod 21, and the other end 222 of the connecting rod 22 is rotatably connected to the second photovoltaic panel 20. In this case, the connecting rod 22 can at least adjust a distance between the first photovoltaic panel 10 and the second photovoltaic panel 20 by rotating relative to the first photovoltaic panel 10 and the second photovoltaic panel 20.

As shown in FIG. 1, the slide rod 21 retracts to the limit position. When the first photovoltaic panel 10 and the second photovoltaic panel 20 are disposed in parallel, the connecting rod 22 is disposed at an incline, that is, the connecting rod 22 and the first photovoltaic panel 10 (or the connecting rod 22 and the second photovoltaic panel 20) are neither parallel and nor perpendicular. In this case, a spacing between the second photovoltaic panel 20 and the first photovoltaic panel 10 in a vertical direction DH becomes smaller. When the connecting rod 22 is inclined to a limit angle, the first photovoltaic panel 10 is attached to the second photovoltaic panel 20. In this case, the second photovoltaic panel 20 is located in the third position, the entire area of the second photovoltaic panel 20 is under solar irradiation and the entire area of the second photovoltaic panel 20 can generate power. The first photovoltaic panel 10 is in a state of receiving a minimum amount of light.

Preferably, shapes of the first photovoltaic panel 10 and the second photovoltaic panel 20 are rectangular. The shapes of the first photovoltaic panel 10 and the second photovoltaic panel 20 may alternatively be another shape. As shown in FIG. 2 and FIG. 3, the slide rod 21 retracts to the limit position. When the first photovoltaic panel 10 and the second photovoltaic panel 20 are disposed in parallel, the connecting rod 22 is perpendicularly disposed, that is, the connecting rod 22 and the first photovoltaic panel 10 (or the connecting rod 22 and the second photovoltaic panel 20) are perpendicular. In this case, there is a specific distance between the second photovoltaic panel 20 and the first photovoltaic panel 10 in the vertical direction DH. In this case, the second photovoltaic panel 20 is located in the second position, the entire area of the second photovoltaic panel 20 is under solar irradiation and the entire area of the second photovoltaic panel 20 can generate power. A small part of the first photovoltaic panel 10 is under solar irradiation and the small part of the first photovoltaic panel 10 can generate a small amount of power.

In the solar power generation apparatus 1 according to this application, the first photovoltaic panel 10 and the second photovoltaic panel 20 may be moved relative to each other, so that space occupied in the horizontal direction is reduced. A relative position between the first photovoltaic panel 10 and the second photovoltaic panel 20 is adjusted based on actual use space and an actual irradiation condition, thereby changing an area for receiving sunlight and improving efficiency of the photovoltaic panels.

Optionally, the connecting rod 22 is a telescopic rod. The spacing between the second photovoltaic panel 20 and the first photovoltaic panel 10 in the vertical direction DH is adjustable by using the telescopic rod 22, so that an amount of light received by the first photovoltaic panel 10 is adjustable. In addition, the telescopic rod 22 allows the second photovoltaic panel 20 to not be attached to the first photovoltaic panel 10, to facilitate movement of the second photovoltaic panel 20.

Optionally, connecting rods 22 are divided into two groups, and the two groups of connecting rods 22 are respectively disposed on two sides of the second photovoltaic panel 20, to respectively connect the two slide rods 21.

Optionally, there is one connecting rod 22 in each group. The two groups of connecting rods 22 are respectively disposed on the two sides of the second photovoltaic panel 20. For example, there are two connecting rods 22. A direction of the second photovoltaic panel 20 and facing the first position is a front side, and a direction of the second photovoltaic panel 20 and away from the first position is a rear side. The two connecting rods 22 are respectively disposed at two corners of the front side of the second photovoltaic panel 20, and two corners of the rear side of the second photovoltaic panel 20 are both hinged to the first photovoltaic panel 10. Alternatively, the two connecting rods 22 are respectively disposed at two corners of the rear side of the second photovoltaic panel 20, and two corners of the front side of the second photovoltaic panel 20 are both hinged to the first photovoltaic panel 10.

Alternatively, optionally, there are two or more connecting rods 22 in each group. For example, there are four connecting rods 22, and every two connecting rods 22 form a group. The four connecting rods 22 are respectively disposed at four corners of the second photovoltaic panel 20.

Optionally, lengths of the connecting rods 22 in a same group are different, so that the second photovoltaic panel 20 is inclined to the first photovoltaic panel 10. For example, the second photovoltaic panel 20 rotates around an axis in the second direction D2 relative to the first photovoltaic panel 10. As shown in FIG. 4, the slide rod 21 retracts to the limit position. Lengths of a connecting rod 22 on the front side and a connecting rod 22 on the rear side are different, so that when the second photovoltaic panel 20 is located in the second position, the second photovoltaic panel 20 is inclined forward and backward relative to the first photovoltaic panel 10. The second photovoltaic panel 20 may be adjusted to an angle facing the sun, to ensure stable power generation of the second photovoltaic panel 20, or an amount of blocking of the first photovoltaic panel 10 by the second photovoltaic panel 20 may be adjusted, so that a part of the first photovoltaic panel 10 may be used for power generation.

Optionally, lengths of the two groups of connecting rods 22 are different, so that the second photovoltaic panel 20 is inclined to the first photovoltaic panel 10. For example, the second photovoltaic panel 20 rotates around an axis in the first direction D1 relative to the first photovoltaic panel 10. Lengths of a connecting rod 22 on the left side and a connecting rod 22 on the right side of the second photovoltaic panel 20 are different, so that the second photovoltaic panel 20 is inclined left and right relative to the first photovoltaic panel 10. In this way, the amount of blocking of the first photovoltaic panel 10 by the second photovoltaic panel 20 may also be adjusted to some extent, to adjust a power generation output of the first photovoltaic panel 10.

Optionally, shapes of the first photovoltaic panel 10 and the second photovoltaic panel 20 are similar, and areas are different. Preferably, an area of the second photovoltaic panel 20 is greater than or equal to an area of the first photovoltaic panel 10. The second photovoltaic panel 20, as a main power generation photovoltaic panel, can directly improve power generation efficiency and generation power of a power generation apparatus, improve irradiation uniformity, improve an anti-interference capability of the power generation apparatus, and better adapt to requirements of different locations. On the basis of the foregoing descriptions, when the second photovoltaic panel 20 is located in the third position, a projection of the second photovoltaic panel 20 is located on a plane of the first photovoltaic panel 10. The projection is overlapped with the first photovoltaic panel 10 or covers the first photovoltaic panel 10. It may be understood that the area of the second photovoltaic panel 20 may alternatively be less than the area of the first photovoltaic panel 10. In this case, although generation power of the second photovoltaic panel 20 decreases, blocking of the first photovoltaic panel 10 by the second photovoltaic panel 20 decreases, and generation power of the first photovoltaic panel 10 increases to some extent.

Certainly, the shapes of the first photovoltaic panel 10 and the second photovoltaic panel 20 may alternatively be congruent, that is, the first photovoltaic panel 10 and the second photovoltaic panel 20 are constructed as photovoltaic panels of a same type. This can reduce accessory models, thereby saving costs.

It may be understood that movement of the slide rod 21 relative to the slide rail 11 and rotation and/or extension or contraction of the connecting rod 22 are two relatively independent motions. In this case, the movement of the second photovoltaic panel 20 relative to the first photovoltaic panel 10 in the first direction D1 and the movement of the second photovoltaic panel 20 relative to the first photovoltaic panel 10 in the vertical direction DH are two relatively independent motions, and the movement of the second photovoltaic panel 20 relative to the first photovoltaic panel 10 in the first direction D1 and inclined rotation of the second photovoltaic panel 20 relative to the first photovoltaic panel 10 are two relatively independent motions.

Optionally, a support rod 23 is further disposed in the solar power generation apparatus 1; and the support rod 23 is configured to support the second photovoltaic panel 20 when the second photovoltaic panel 20 is moved in the first direction D1 to a position deviating from the first photovoltaic panel 10, for example, the second photovoltaic panel 20 is located in the first position. It may be understood that the second photovoltaic panel 20 has a specific weight, and is mainly supported through a sliding fit between the slide rail 11 and the slide rod 21. When the slide rod 21 extends out of the slide rail 11, the second photovoltaic panel 20 needs to be supported by the support rod 23, to ensure stability of the solar power generation apparatus 1.

Optionally, the support rod 23 is rotatably connected to the second photovoltaic panel 20. Preferably, the support rod 23 is disposed on the front side of the second photovoltaic panel 20, that is, disposed on a side of the second photovoltaic panel 20 away from the first photovoltaic panel 10 when the second photovoltaic panel 20 is moved in the first direction to the limit position deviating from the first photovoltaic panel 10. It may be understood that when the slide rod 21 extends out of the slide rail 11, the front side of the second photovoltaic panel 20 is an end portion that is away from the first photovoltaic panel 10, and tilting is likely to occur. Therefore, the support rod 23 is disposed on the front side of the second photovoltaic panel 20. The support rod 23 is rotatably connected to the second photovoltaic panel 20, so that the support rod 23 can be contracted when the second photovoltaic panel 20 is located in the second position or the third position. Preferably, when the support rod 23 is contracted, the support rod 23 and the second photovoltaic panel 20 are disposed in parallel.

In some embodiments of this application, the support rod 23 is a telescopic rod, to adapt to different installation heights of the solar power generation apparatus 1.

Optionally, a surface of the first photovoltaic panel 10 facing the second photovoltaic panel 20 is arranged with a buffer ring 30. A surface of the second photovoltaic panel 20 facing the first photovoltaic panel 10 is arranged with a buffer ring 30. The buffer ring 30 can serve functions of cushioning and shock absorption, preventing collision or friction between the first photovoltaic panel 10 and the second photovoltaic panel 20, thereby reducing mechanical damage and prolonging a service life of the solar power generation apparatus 1. The shock absorption function of the buffer ring 30 can prevent mechanical vibration from spreading between the first photovoltaic panel 10 and the second photovoltaic panel 20. Therefore, the buffer ring 30 can improve stability of the solar power generation apparatus 1 and ensure normal operation of a system. The buffer ring 30 can protect the first photovoltaic panel 10 and the second photovoltaic panel 20 from mechanical damage, and ensure that no scratches or major damage occur on surfaces of the first photovoltaic panel 10 and the second photovoltaic panel 20. This greatly affects light absorption and power conversion efficiency of the first photovoltaic panel 10 and the second photovoltaic panel 20, thereby improving power generation efficiency. IInstallation of the buffer ring 30 can reduce maintenance costs of the solar power generation apparatus 1. Because the buffer ring 30 can reduce mechanical vibration and shock, thereby preventing mechanical damage, a quantity of times of maintaining and replacing the first photovoltaic panel 10 and the second photovoltaic panel 20 can be reduced, and operating costs can be reduced. The buffer ring 30 may further prevent dust accumulation and rainwater ingress, thereby preventing dust and rainwater from being accumulated on the surface of the first photovoltaic panel 10.

The first photovoltaic panel 10 is a transparent photovoltaic panel. The second photovoltaic panel 20 is a transparent photovoltaic panel. The photovoltaic panels are configured to be transparent, improving overall power generation efficiency of the power generation apparatus. Because the second photovoltaic panel 20 is configured to be transparent, sunlight can pass through the second photovoltaic panel 20 and reach the first photovoltaic panel 10, so that the first photovoltaic panel 10 and the second photovoltaic panel 20 can generate power simultaneously, thereby implementing dual utilization effect of solar energy. In addition, the transparent photovoltaic panels can generate power, and allow sunlight to pass through to irradiate a region below the power generation apparatus, thereby improving daylighting. The transparent photovoltaic panels are applicable to a plurality of scenarios.

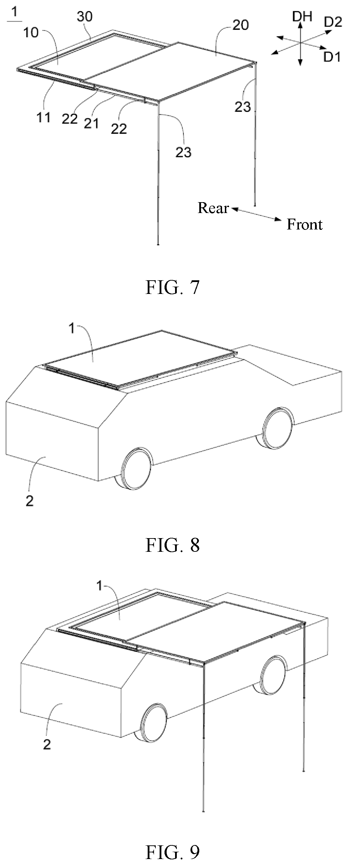

This application further provides a vehicle 2, including the foregoing solar power generation apparatus 1. As shown in FIG. 8 and FIG. 9, the solar power generation apparatus 1 is disposed on the top of the vehicle 2.

In the vehicle 2 according to this application, a photovoltaic panel with an adjustable area is configured to increase electric energy generated by the solar power generation apparatus 1, thereby extending an endurance range of the vehicle 2. In addition, the area of the photovoltaic panel can be appropriately arranged based on roof space and lighting condition, to maximize an area receiving sunlight and improve efficiency of the solar power generation apparatus 1.

In some embodiments of this application, the first photovoltaic panel 10 is fixedly mounted to a roof of the vehicle, and uses solar energy to provide power for the vehicle, thereby prolonging a battery life.

In some embodiments of this application, the first photovoltaic panel 10 is a transparent photovoltaic panel. The second photovoltaic panel 20 is a transparent photovoltaic panel. The photovoltaic panel can be used as a sunroof for the vehicle, thereby enhancing aesthetics of the roof without affecting an appearance of the vehicle. Integration is high and power generation efficiency is high.

The following describes a specific application of the power generation apparatus 1 in the vehicle 2.

In the following embodiment, the solar power generation apparatus 1 includes a first photovoltaic panel 10 and a second photovoltaic panel 20 that are non-transparent and substantially congruent in shape, four (two in a group) telescopic connecting rods 22, two slide rails 11, two slide rods 21 fitting in the slide rails 11, and two telescopic support rods 23.

### Embodiment 1

As shown in FIG. 1, when a second photovoltaic panel 20 is located in a third position, and a first photovoltaic panel 10 and the second photovoltaic panel 20 are disposed in parallel, a connecting rod 22 is disposed at an incline, and the first photovoltaic panel 10 is attached to the second photovoltaic panel 20. In this case, only the second photovoltaic panel 20 is under solar irradiation and can generate power, and the first photovoltaic panel 10 is completely blocked by the second photovoltaic panel 20 and cannot generate power. An operating condition of the solar power generation apparatus 1 shown in this embodiment can be used for a vehicle in any state, and a power generation output of the solar power generation apparatus 1 is only standard power generation output of one photovoltaic panel on an upper layer.

### Embodiment 2

As shown in FIG. 2, a second photovoltaic panel 20 is located in a second position, a connecting rod 22 of a solar power generation apparatus 1 is upright but not extended, and the second photovoltaic panel 20 is not moved laterally. In this case, an entire area of the second photovoltaic panel 20 is under full solar irradiation and can generate power, and a small part of a first photovoltaic panel 10 is under solar irradiation and can generate a small amount of power. An operating condition of a solar power generation apparatus 1 shown in this embodiment can be used for a vehicle in a driving state and in a stopped state.

### Embodiment 3

As shown in FIG. 3, a connecting rod 22 of a solar power generation apparatus 1 is upright and extended, and a second photovoltaic panel 20 does not slip laterally. In this case, there is a large height difference between the second photovoltaic panel 20 and a first photovoltaic panel 10, and a part of the first photovoltaic panel 10 is under solar irradiation, and generates a specific amount of power. This operating condition can be used for a vehicle in a driving state and in a stopped state. A solar power generation output of the solar power generation apparatus 1 reaches a maximum of 1.2 times a standard power generation output of the photovoltaic panel.

### Embodiment 4

As shown in FIG. 4, a second photovoltaic panel 20 of a solar power generation apparatus 1 does not slip laterally, and lengths and inclinations of four telescopic connecting rods 22 on the roof are separately controlled, so that the second photovoltaic panel 20 has a specific inclination. If an inclination of the second photovoltaic panel 20 is adapted to an incident angle of sunlight, the second photovoltaic panel 20 can track the incident angle of sunlight, thereby implementing a maximum power generation output of the second photovoltaic panel 20 under irradiation of sunlight. This state of the solar power generation apparatus 1 can be used for a vehicle in a driving state. A solar power generation output is 1.05 times to 1.3 times a standard power generation output of the photovoltaic panel.

### Embodiment 5

As shown in FIG. 5, a part of a second photovoltaic panel 20 of a solar power generation apparatus 1 is moved laterally. In this case, an entire area of the second photovoltaic panel 20 is under full solar irradiation and can generate power, one part of an area of a first photovoltaic panel 10 is under full solar irradiation, and the other part of the area is under weak solar irradiation. Both parts of the area of the first photovoltaic panel 10 can generate power. Because only the part of the second photovoltaic panel 20 is moved laterally, the second photovoltaic panel 20 can maintain good stability when a vehicle is in a stopped state. This state of the solar power generation apparatus 1 can be used only for the vehicle in a stopped state. In addition, there is a need to ensure that a center of gravity of the second photovoltaic panel 20 is in a coverage region of the first photovoltaic panel 10. A solar power generation output reaches a maximum of 1.5 times a standard power generation output of the photovoltaic panel.

### Embodiment 6

As shown in FIG. 6, a second photovoltaic panel 20 is located in a first position, that is, the second photovoltaic panel 20 is completely moved laterally, and a support rod 23 is anchored to the ground. As shown in FIG. 7, the support rod 23 may be further extended based on an actual application scenario, to support the second photovoltaic panel 20. In this case, entire areas of the second photovoltaic panel 20 on an upper layer and a first photovoltaic panel 10 on a lower layer are under full solar irradiation and can generate power. Because the support rod 23 is anchored to the ground and a vehicle is in a stopped state, the second photovoltaic panel 20 can have good structural stability. A solar power generation output of this solar power generation apparatus 1 reaches a maximum of 2 times a standard power generation output of the photovoltaic panel.

### Embodiment 7

When a vehicle is in a stopped state, a second photovoltaic panel 20 of a solar power generation apparatus 1 is completely moved laterally and a support rod 23 is anchored to the ground. On a premise of detecting the incident angle of sunlight, a height or an inclination of a connecting rod 22 and a height of the support rod 23 are controlled, so that the second photovoltaic panel 20 can partially track the incident angle of sunlight, thereby implementing a maximum power generation output of the second photovoltaic panel 20 under solar irradiation. This solar power generation apparatus 1 can be used for the vehicle in a stopped state. A solar power generation output reaches a maximum of 2.3 times a standard power generation output of the photovoltaic panel.

In this application, the standard power generation output of the photovoltaic panel is an average daily power generation output when a solar panel of the photovoltaic panel is placed on a fixed horizontal plane.

In this specifications, "equal," "same," and the like do not strictly limit the meaning to mathematical and/or geometric definitions, but also include an error that can be understood by a person skilled in the art of this application, allowing for manufacturing or usage variations. The terms used in this specification are merely intended to describe specific embodiments, and are not intended to limit this application. In this specifications, terms such as "disposition" may indicate that one component is directly attached to another component, or one component is attached to another component through an intermediary component. A feature described in one implementation in this specification may be applied to another implementation alone or in combination with another feature, unless the feature is not applicable in the another implementation or otherwise specified.

This application is described with the foregoing implementations, but it should be understood that the foregoing implementations are merely for purposes of illustration and description, and are not intended to limit this application to the scope of the described implementations. A person skilled in the art may understand that, more variations and modifications may be made according to teachings of this application and all these variations and modifications fall within the protection scope claimed in this application.

## Claims

1. A solar power generation apparatus (1), comprising:
a first photovoltaic panel (10), the first photovoltaic panel (10) having at least one slide rail (11) extending in a first direction;
a slide rod (21), the slide rod (21) being disposed corresponding to the slide rail (11), and being slidably connected to the corresponding slide rail (11) in the first direction;
a second photovoltaic panel (20), the second photovoltaic panel (20) being connected to the slide rod (21), and being movable relative to the first photovoltaic panel (10) in the first direction along with the sliding of the slide rod (21); and
at least one connecting rod (22), one end (221) of the connecting rod (22) being rotatably connected to the slide rod (21), and the other end (222) being rotatably connected to the second photovoltaic panel (20).

2. The solar power generation apparatus (1) according to claim 1, wherein the connecting rod (22) is a telescopic rod.

3. The solar power generation apparatus (1) according to claim 1 or 2, wherein the first photovoltaic panel (10) has two slide rails (11) respectively disposed on two sides of the first photovoltaic panel (10) in a second direction, and the second direction is different from the first direction.

4. The solar power generation apparatus (1) according to claim 3, wherein connecting rods (22) are divided into two groups, each of the two groups has one or a plurality of connecting rods (22), and the two groups of connecting rods (22) are respectively connected to two slide rods (21).

5. The solar power generation apparatus (1) according to claim 3 or 4, wherein each of the two groups has a plurality of connecting rods (22), and lengths of the connecting rods (22) in the same group are different, so that the second photovoltaic panel (20) is inclined to the first photovoltaic panel (10).

6. The solar power generation apparatus (1) according to any one of claims 3 to 5, wherein lengths of the two groups of connecting rods (22) are different, so that the second photovoltaic panel (20) is inclined to the first photovoltaic panel (10).

7. The solar power generation apparatus (1) according to any one of claims 3 to 6, wherein the first direction is perpendicular to the second direction.

8. The solar power generation apparatus (1) according to any one of claims 1 to 7, the solar power generation apparatus further comprising a support rod (23); the support rod (23) being connected to the second photovoltaic panel (20); and the support rod (23) being configured to support the second photovoltaic panel (20) when the second photovoltaic panel (20) is moved in the first direction to a position deviating from the first photovoltaic panel (10).

9. The solar power generation apparatus (1) according to claim 8, wherein the support rod (23) is rotatably connected to the second photovoltaic panel (20).

10. The solar power generation apparatus (1) according to claim 8 or 9, wherein the support rod (23) is a telescopic rod.

11. The solar power generation apparatus (1) according to any one of claims 1 to 10, wherein shapes of the first photovoltaic panel (10) and the second photovoltaic panel (20) are similar or congruent.

12. The solar power generation apparatus (1) according to any one of claims 1 to 11, wherein a surface of the first photovoltaic panel (10) facing the second photovoltaic panel (20) is arranged with a buffer ring (30), and/or
a surface of the second photovoltaic panel (20) facing the first photovoltaic panel (10) is arranged with a buffer ring (30).

13. The solar power generation apparatus (1) according to any one of claims 1 to 12, wherein each or either of the first photovoltaic panel (10) and the second photovoltaic panel (20) is a transparent photovoltaic panel.

14. The solar power generation apparatus (1) according to any one of claims 1 to 13, wherein when the second photovoltaic panel (20) is moved in the first direction to a limit position deviating from the first photovoltaic panel (10), the first photovoltaic panel (10) and the second photovoltaic panel (20) do not overlap in a projection of the solar power generation apparatus (1) in a direction perpendicular to the first photovoltaic panel (10).

15. A vehicle (2), comprising the solar power generation apparatus (1) according to any one of claims 1 to 14.
